(19) Europäisches Patentamt
European Patent Office
Office européen des brevets

(11) Numéro de publication: **0 096 629**
**B1**

# (12) FASCICULE DE BREVET EUROPEEN

(45) Date de publication du fascicule du brevet: **24.07.85**

(51) Int. Cl.⁴: **C 07 C 143/74**, C 07 C 103/88, C 07 F 1/00, H 01 M 6/18

(21) Numéro de dépôt: **83401082.9**

(22) Date de dépôt: **30.05.83**

(54) **Bis perhalogénoacyl - ou sulfonyl - imidures de métaux alcalins, leurs solutions solides avec des matières plastiques et leur application à la constitution d'éléments conducteurs pour des générateurs électrochimiques.**

(30) Priorité: **01.06.82 FR 8209540**

(43) Date de publication de la demande: **21.12.83 Bulletin 83/51**

(45) Mention de la délivrance du brevet: **24.07.85 Bulletin 85/30**

(84) Etats contractants désignés: **AT BE CH DE GB IT LI LU NL SE**

(56) Documents cités: **DE - A - 2 610 853**

(73) Titulaire: **ANVAR Agence Nationale de Valorisation de la Recherche, 43, rue Caumartin, F-75436 Paris Cédex 09 (FR)**
Titulaire: **SOCIETE NATIONALE ELF AQUITAINE, Tour Aquitaine, F-92400 Courbevoie (FR)**

(72) Inventeur: **Armand, Michel, 10, rue Gabriel Fauré, F-74000 Annecy (FR)**
Inventeur: **El Kadiri Cherkaoui El Moursly, Fouzia, Villa Cherkaoui Rue Smara Bettana, Sale (MA)**

(74) Mandataire: **Gutmann, Ernest et al, Cabinet Plasseraud 84, rue d'Amsterdam, F-75009 Paris (FR)**

EP 0 096 629 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention est relative à un nouveau composé ionique ayant pour formule $M^+X^-$, dans laquelle M est un cation dérivé d'un métal alcalin ou ion ammonium, et $X^-$ est un anion ayant un comportement semblable à celui d'un acide fort. L'invention concerne plus particulièrement des composés ioniques susceptibles de se dissoudre au sein d'un matériau macromoléculaire formé au moins en partie d'un ou plusieurs homo- et/ou copolymères dérivés d'un ou plusieurs motifs monomères comportant au moins un hétéro-atome, notamment d'oxygène ou d'azote, apte à former des liaisons du type donneur-accepteur avec le cation du composé ionique. Plus particulièrement encore, l'invention concerne des composés ioniques de ce type, susceptibles de se dissoudre dans au moins certains des matériaux plastiques, tels que ceux qui ont été décrits dans la demande de brevet européen N° 0013199 intitulée «Générateurs électrochimiques de production de courant et de nouveaux matériaux pour leur fabrication».

L'invention concerne également les solutions solides elles-mêmes ainsi obtenues et qui, comme celles plus particulièrement décrites dans la susdite demande de brevet européen, sont douées d'une conductivité cationique suffisante pour être utilisables pour la production d'électrolytes solides pour la constitution de générateurs électrochimiques, de préférence rechargeables. Ces solutions solides sont encore applicables à la constitution d'électrodes de générateurs électrochimiques, lorsque ces électrodes sont constituées par le produit d'agglomération en une masse composite de la matière active de celle-ci et, le cas échéant, d'un composé inerte à conduction électronique, d'une part, et de la solution solide susdite, d'autre part.

Il va de soi que les solutions solides selon l'invention peuvent mettre en œuvre tout autre type de matière plastique dans la mesure où leurs caractéristiques de solubilité réciproques sont suffisantes à l'obtention d'une solution solide présentant une conductivité cationique de $10^{-5}$ ohms $^{-1}$.cm$^{-1}$, de préférence à une température n'excédant pas 130° C.

Les composés ioniques selon l'invention peuvent être représentés par la formule:

$$(C_n X_{2n+1} Y)_2 N^-, M^+$$

dans laquelle:

X est un halogène,

n varie de 1 à 4

Y est un groupe CO ou $SO_2$ et

M est un métal alcalin.

Le groupe X peut être le chlore, le brome et l'iode ou, de préférence, le fluor.

M est constitué de préférence par le lithium ou le sodium. Il peut également être constitué par le potassium.

Les composés obtenus sont dénommés:

-bis-perhalogéno-acyl-imidures, lorsque Y est constitué par le groupe CO et

-bis-perhalogéno-sulfonyl-imidures, lorsque le groupe Y est constitué par le groupe $SO_2$.

L'invention concerne également un procédé de préparation des composés sus-indiqués.

Pour former les composés selon l'invention, et notamment les bis-perhalogéno-acyl-imidures, on aura avantageusement recours à la réaction qui consiste à faire réagir l'anhydride de formule

$$(C_nX_{2n+1}Y)_2\,O,$$

dans laquelle X, n et Y ont les significations sus-indiquées, avec un cyanate d'un métal alcalin plus lourd, de préférence de potassium, la réaction étant complétée, dans le cas où l'on souhaite obtenir un bis-perhalogéno-acyl-imidure (ou un bis-halogéno-sulfonyl-imidure) de lithium ou de sodium, par une réaction d'échange ionique en solution avec un sel de lithium ou de sodium dont l'anion est apte à former, avec des ions potassium, un sel insoluble dans le milieu de réaction, le composé ionique contenant le cation lithium ou sodium pouvant alors être séparé du milieu de réaction.

Pour former les bis-perhalogéno-sulfonyl-imidures, on a avantageusement recours au procédé qui consiste à faire réagir l'anhydride de formule:

$$(C_nX_{2n+1}\,SO_2)_2\,O,$$

dans laquelle X et n ont les significations sus-indiquées, avec l'acide correspondant et l'urée, de préférence en l'absence de solvant, le mélange étant ensuite recueilli dans une solution aqueuse. Celle-ci est ensuite traitée par un halogénure de tétraalkylammonium, notamment le bromure de tétrabutylammonium, pour précipiter le bis-perhalogéno-sulfonyl-imidure de tétraalkylammonium correspondant. Par réaction d'échange ionique, entre le composé précédemment obtenu et un réactif constitué par un dérivé de métal alcalin, on obtient finalement le composé selon l'invention. L'échange ionique peut notamment être réalisé en mettant en jeu les solubilités différentielles dans un système de solvants non miscibles entre eux, comme cela sera illustré dans les exemples de réalisation formulés plus loin, du bis-perhalogéno-sulfonyl-imidure du métal alcalin d'une part, et du dérivé résultant de la substitution dans le susdit réactif du métal alcalin par le susdit groupe alkylammonium, d'autre part.

Les composés ioniques selon l'invention présentent des qualités tout à fait satisfaisantes de dissolution mutuelle avec le poly (oxyde de propylène) et même, pour les composés dans lesquels les groupes R sont constitués par des chaînes hydrocarbonées de faible longueur, avec le poly (oxyde d'éthylène). Les solutions solides obtenues présentent une conductivité cationique permettant leur utilisation en tant que matériaux d'électrolyte pour des générateurs électrochimiques, de préférence du type rechargeable, dont les caractéristiques préférées sont rappelées plus loin.

Elle concerne donc les nouveaux matériaux à conduction ionique, notamment cationique, ainsi obtenus, plus particulièrement un nouvel électrolyte solide polymère constitué au moins en partie par une solution solide d'un ou plusieurs des composés ioniques selon l'invention, entièrement dissous au sein d'un matériau macromoléculaire formé au moins en partie par un polymère, dont les motifs monomères (d'une ou plusieurs sortes) comportent au moins un hétéroatome, notamment d'oxygène ou d'azote, apte à former des liaisons du type donneur-accepteur avec le cation du composé ionique.

De préférence, le rapport du nombre d'hétéroatomes provenant du ou des motifs monomères dudit polymère au nombre d'atomes du métal alcalin dudit composé ionique est compris entre 4 et 30, notamment 4 et 16. Il va de soi que la proportion du composé ionique dissous doit être compatible avec son niveau de solubilité dans le polymère choisi.

Le métal alcalin est de préférence le lithium ou le sodium.

Des matériaux plastiques préférés dans lesquels les composés ioniques selon l'invention mis en solution, sont des homo- et/ou copolymères dérivés de motifs monomères représentés:

— soit par la formule suivante:

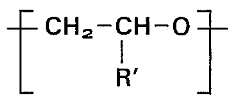

dans laquelle R' représente un atome d'hydrogène ou l'un des groupes Ra, $-CH_2-O-Ra$, $-CH_2-O-Re-Ra$, $-CH_2-N=(CH_3)_2$, avec Ra représentant un radical alkyle ou cycloalkyle comportant notamment 1 à 16, de préférence 1 à 4 atomes de carbone, Re représentant un radical polyéther de formule générale $-(CH_2-CH_2-O)_p-$, p ayant une valeur de 1 à 100, notamment de 1 à 2,

— soit par la formule suivante:

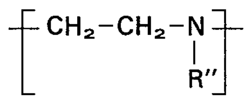

dans laquelle R'' représente Ra, $-Re-Ra$, avec Ra et Re ayant respectivement l'une des significations susindiquées,

— soit par la formule suivante:

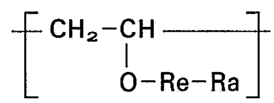

dans laquelle Ra et Re ont respectivement l'une des significations susindiquées,

— soit par la formule suivante:

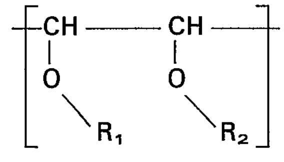

dans laquelle $R_1$ et $R_2$ sont identiques ou différents et représentent chacun l'un des groupes Re, Re−Ra avec les significations ci-dessus, Re pouvant alors représenter aussi un polyéther de formule:

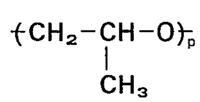

La préparation de l'électrolyte solide polymère peut s'effectuer par mise en solution, dans un solvant tel que l'acétonitrile, ou encore le méthanol, du polymère et du composé ionique, puis élimination du solvant étant entendu que l'on utilise une proportion de composé ionique inférieure à celle pour laquelle le seuil de solubilité est atteint.

On peut aussi utiliser toute méthode connue ne mettant pas en œuvre de solvant, par exemple par dissolution dans le polymère fondu.

Les électrolytes solides réalisés selon l'invention, trouvent une application particulièrement intéressante pour la réalisation de générateurs électrochimiques aussi bien primaires que secondaires.

En particulier, un électrolyte solide comportant en solution un composé ionique du genre susindiqué, peut être associé à une électrode négative constituée d'un matériau apte à fournir l'ion alcalin correspondant au métal du composé ionique choisi et une électrode positive apte à incorporer les atomes de ce métal. On peut, par exemple, prévoir une électrode négative constituée par ce même métal alcalin sous la forme d'un alliage, ou constituée par un composé intermétallique, un composé d'insertion ou analogue. Pour l'électrode positive, on peut utiliser tout matériau dont la structure cristalline permet l'insertion de métaux alcalins. On cite par exemple les chalcogénures qui permettent la diffusion du métal alcalin dans leur structure. On peut encore, pour ce qui est d'autres exemples de matériaux appropriés à la formation de l'électrode positive, se référer à la demande de brevet européen déjà citée.

On peut aussi prévoir de réaliser une des électrodes, par exemple la positive, en formant un composite à partir de la matière active de celle-ci et de la solution solide du composé ionique, au sein du même matériau macromoléculaire. Ce composite peut comporter aussi un composé inerte à conduction électronique. On pourra avoir recours, pour constituer de telles électrodes — et mis à part le choix du composé cationique — aux mêmes modes de constitution que ceux décrits dans la demande de brevet européen N° 0013199.

Lorsqu'on réalise ces générateurs, on s'aperçoit que le nouvel électrolyte selon l'invention présente l'avantage que l'anion du sel ou composé ionique en solution est inerte vis-à-vis de la plupart des matériaux d'électrode que l'on peut utiliser. Cette propriété autorise un grand nombre de cycles et un stockage stable. En outre, cette inertie chimique confère aux générateurs ainsi réalisés une très bonne résistance aux chocs thermiques.

D'autres caractéristiques et avantages des électrolytes solides polymères selon l'invention apparaîtront dans les exemples de réalisation qui suivent étant bien entendu que ces exemples ne sont nullement limitatifs.

Ces exemples sont indicatifs, notamment des propriétés chimiques et/ou physiques de composés ioniques particuliers de l'invention et, en relation avec certains électrolytes plastiques constitués avec certains d'entre eux, des valeurs des températures en °C pour lesquelles les conductivités

sont égales à environ $10^{-5}\Omega^{-1}(T\sigma 10^{-5})$, voire même à $10^{-4}\Omega^{-1}$ $cm^{-1}(T\sigma 10^{-4})$. Ces mesures ont été effectuées sous vide, de façon à éliminer toute trace d'humidité et/ou de solvant.

Dans tous ces exemples, le matériau macromoléculaire est, selon le cas, un poly-(oxyde d'éthylène) (POE) ou un poly-(oxyde de propylène) de masses moléculaires égales ou supérieures à 900 000. L'électrolyte a été obtenu par dissolution de 1 g de ce poly-(oxyde d'éthylène) ou de ce poly-(oxyde de propylène) dans 35 ml d'acétonitrile, puis addition du composé ionique, pour obtenir les rapports atomiques O/Li ou O/Na qui sont indiqués ci-après.

La solution ainsi obtenue est coulée sur un support de polytétrafluoréthylène, sur une épaisseur de 5 mm, puis étuvée à 60° C pendant 3 heures.

Les mesures de conductivité ont été faites selon les techniques décrites par E. SCHOULER et al, J. Chim. Phys. 9 1309/16 (1973) et D. RAVAINE et al, J. Chim. Phys. 5 93-70 (1974)

1) *Préparation des Bis (trifluorométhyl acétyl) imidures*

On met en œuvre la réaction pour préparer ce composé dérivé

$(CF_3CO)_2O + KOCN \rightarrow \overline{CO_2}\nearrow + K^{+-}N(CF_3CO)_2$

solvant: acétonitrile
température: ambiante

La conversion du sel de potassium en sel de lithium se fait par échange ionique avec LiCl, au sein d'une solution aqueuse.

Ce composé a été caractérisé par son spectre IR. Il est représenté dans la fig. 1: variation de la transmission en fonction, soit de la longueur d'onde, en microns, soit du nombre d'onde, en $cm^{-1}$. On observe dans la région 800-600 $cm^{-1}$ une impureté ou peut-être un résidu de KOCN (visé comme K.N dans la figure).

2) *Préparation des Bis (trifluorométhyl sulfonyl) imidures*

Deux réactions permettent d'obtenir le composé cherché $(CF_3SO_2)_2N$.

*1re réaction*

$(CF_3SO_2)_2O + CF_3SO_3H + CO(NH_2)_2 \rightarrow$
$\rightarrow (CF_3SO_2)_2NH + \overline{CO_2}\nearrow + NH_4CF_3SO_2$

pas de solvant
température ambiante.

Les deux produits obtenus après réaction sont ensuite dissous dans l'eau; l'addition du bromure de tétrabutylammonium à cette solution permet de précipiter le composé $(Bu)_4N^{+-}N(CF_3SO_2)_2$.

*2e réaction*

$NH_4Cl + 2(CF_3SO_2)_2O + 4C_5H_5N \rightarrow$
$\rightarrow C_5H_5NH^{+-}N(CF_3SO_2)_2 + C_5H_5NHCl$
$+ 2C_5H_5NHCF_3SO_3$

solvant: dichlorométhane
température: ambiante.

Après élimination du solvant ($CH_2Cl_2$), les produits de la réaction sont dissous dans l'eau. Le bromure de tétrabutylammonium additionné à cette solution conduit à la précipitation de $(Bu)_4N^{+-}N(CF_3SO_2)_2$.

Le sel de sodium correspondant est obtenu par l'échange ionique suivant:

$(Bu)_4NN(CF_3SO_2)_2 + NaB\ (C_6H_5)_4$
$+ (Bu)_4NB\ (C_6H_5)_4$

solvants: $H_2O$ et $CH_2Cl_2$.

Le caractère hydrophile des ions $Na^+$ et $(CF_3SO_2)_2N^-$ permet leur migration dans la phase aqueuse. Par contre, les ions hydrophiles $(Bu)_4N^+$ et $B\ (C_6H_5)_4^-$ sont éliminés par la solution organique ($CH_2Cl_2$).

La fig. 2 fournit un spectre IR du bis (trifluorométhylsulfonyl) imidure de sodium. Les pics d'absorption dans la région 800 $cm^{-1}$ paraissent dus à une trace de $B\ (C_6H_5)_4^-$.

Dans le tableau qui suit on a fourni les données électrochimiques auxquelles conduisent les composés qui précèdent, après dissolution dans le POE, dans les proportions atomiques relatives qui résultent également du tableau.

| Composé ionique | Matériau macro-moléculaire | O/M | $t\sigma\ 10^{-4}$ | $t\sigma\ 10^{-5}$ |
|---|---|---|---|---|
| $K^+N(CF_3CO)_2^-$ | POE | 12 | 44 | 42,2 |
| $Li^+N(CF_3CO)_2^-$ | POE | 8 | 73,5 | 46,75 |
| $Li^+N(CF_3CO)_2^-$ | POE | 12 | 64,8 | 47,5 |
| $Na^+N(CF_3SO_2)_2^-$ | POE | 12 | 60,7 | 45,6 |

Ces résultats attestent de la conductivité tout à fait satisfaisante des solutions solides obtenues, lesquelles peuvent avec avantage être utilisées pour la fabrication des générateurs électrochimiques du genre défini ci-dessus.

**Revendications pour les Etats contractants**
BE, CH, DE, GB, IT, LI, LU, NL, SE

1. Composé ionique, caractérisé par la formule:

$$(C_nX_{2n+1}Y)_2N^-, M^+$$

dans laquelle
X est un halogène
n varie de 1 à 4
Y est un groupe CO ou $SO_2$ et
M est un métal alcalin.

2. Composé ionique selon la revendication 1, caractérisé en ce que X est du fluor.

3. Composé ionique selon la revendication 1 ou la revendication 2, caractérisé en ce qu'il consiste

en un bis (trifluorométhyl-acétyl) imidure d'un métal alcalin.

4. Composé ionique selon la revendication 1 ou la revendication 2, caractérisé en ce qu'il consiste en un bis (trifluorométhyl-sulfonyl) imidure d'un métal alcalin.

5. Composé ionique selon l'une quelconque des revendications 1 à 4, caractérisé en ce que M est constitué par du lithium ou du sodium.

6. Composé ionique selon l'une quelconque des revendications 1 à 4, caractérisé en ce que M est constitué par du potassium.

7. Matériau à conduction ionique, notamment cationique, caractérisé en ce qu'il est constitué au moins en partie par une solution solide d'un ou plusieurs des composés ioniques selon l'une quelconque des revendications 1 à 6, entièrement dissous au sein d'un matériau macromoléculaire formé au moins en partie par un polymère dont les motifs monomères comportent au moins un hétéroatome, notamment d'oxygène ou d'azote, apte à former des liaisons du type donneur-accepteur avec le cation du composé ionique.

8. Matériau selon la revendication 7, caractérisé en ce que le matériau macromoléculaire est constitué par du poly-(oxyde d'éthylène) ou du poly-(oxyde de propylène).

9. Matériau selon la revendication 7 ou la revendication 8, caractérisé en ce que le rapport du nombre d'hétéroatomes provenant des motifs monomères du susdit matériau macromoléculaire au nombre d'atomes du métal alcalin dudit composé ionique est compris entre 4 et 30, notamment entre 4 et 16.

10. Générateur électrochimique, caractérisé en ce que son électrolyte est constituée par le matériau selon l'une quelconque des revendications 7 à 9 et en ce que l'électrode négative qui lui est associée est constituée d'un matériau apte à fournir l'ion alcalin correspondant au métal du composé ionique choisi, et que l'électrode positive qui lui est associée est apte à incorporer les atomes de ce métal.

**Revendications pour l'Etat contractant**: AT

1. Procédé de préparation des composés ioniques de formule:

$$(C_nX_{2n+1}Y)_2N^-, M^+$$

dans laquelle:

– X est un halogène,

– n varie de 1 à 4,

– Y est un groupe CO ou $SO_2$ et

– M est un métal alcalin, caractérisé en ce qu'on fait réagir l'anhydride de formule:

$$(C_nX_{2n+1}Y)_2O$$

dans laquelle X, n et Y ont les significations susindiquées, avec un cyanate d'un métal alcalin plus lourd, de préférence de potassium, la réaction étant complétée, dans le cas où l'on souhaite obtenir un bis-perhalogéno-acyl-imidure (ou un bis-halogéno-sulfonyl-imidure) de lithium ou de sodium, par une réaction d'échange ionique en solution avec un sel de lithium ou de sodium dont l'anion est apte à former, avec des ions potassium, un sel insoluble dans le milieu de réaction, le composé ionique contenant le cation lithium ou sodium pouvant alors être séparé du milieu de réaction.

2. Procédé de préparation de composés ioniques de formule indiquée à la revendication 1, caractérisé en ce qu'on fait réagir l'anhydride de formule:

$$(C_nX_{2n+1}SO_2)_2O$$

dans laquelle X et n ont les significations sus-indiqué avec l'acide correspondant et l'urée, de préférence en l'absence de solvant, le mélange étant ensuite recueilli dans une solution aqueuse, lequel est ensuite traité par un halogénure de tétraalkylammonium, notamment le bromure de tétrabutylammonium, pour précipiter le bis-perhalogéno-sulfonyl-imidure de tétraalkylammonium correspondant et par réaction d'échange ionique entre le composé précédemment obtenu et le réactif constitué par un dérivé de métal alcalin, on obtient finalement le composé selon la revendication 1.

3. Procédé selon la revendication 1 ou 2, caractérisé en ce que X est du fluor.

4. Procédé selon les revendications 1 à 3, caractérisé en ce qu'on obtient un bis(trifluorométhylacétyl)imidure d'un métal alcalin.

5. Procédé selon les revendications 1 à 3, caractérisé en ce qu'on obtient un bis(trifluorométhyl-sulfonyl)imidure d'un métal alcalin.

6. Procédé selon l'une quelconque des revendications 1 à 5, caractérisé en ce que M est constitué par du lithium ou sodium.

7. Procédé selon l'une quelconque des revendications 1 à 5, caractérisé en ce que M est constitué par du lithium ou du sodium.

7. Procédé selon l'une quelconque des revendications 1 à 5, caractérisé en ce que M est constitué par du potassium.

8. Procédé de préparation d'un matériau à conduction ionique, notamment cationique, caractérisé en ce que l'on met en solution un ou plusieurs des composés ioniques obtenus par le procédé selon l'une quelconque des revendications 1 à 7, entièrement dissous au sein d'un matériau macromoléculaire formé au moins en partie par un polymère dont les motifs monomères comportent au moins un hétéroatome, notamment d'oxygène ou d'azote, apte à former des liaisons du type donneur-accepteur avec le cation du composé ionique.

9. Procédé de préparation d'un matériau à conduction ionique selon la revendication 8, caractérisé en ce que le matériau macromoléculaire est constitué par du poly-(oxyde d'éthylène) ou du poly-(oxyde de propylène).

10. Procédé de préparation d'un matériau à conduction ionique selon la revendication 8 ou 9, caractérisé en ce que le rapport du nombre d'hétéroatomes provenant des motifs monomères du susdit matériau macromoléculaire au nombre

d'atomes du métal alcalin dudit composé ionique est compris entre 4 et 30, notamment entre 4 et 16.

**Patentansprüche für die Vertragsstaaten**

BE, CH, DE, GB, IT, LI, LU, NL, SE

1. Ionische Verbindung, gekennzeichnet durch die Formel:

$$(C_nX_{2n+1}Y)_2N^-,M^+$$

worin:
X für ein Halogen steht,
n einen Wert von 1 bis 4 aufweist,
Y eine CO- oder $SO_2$-Gruppe bedeutet, und
M ein Alkalimetall darstellt.

2. Ionische Verbindung nach Anspruch 1, dadurch gekennzeichnet, dass X für Fluor steht.

3. Ionische Verbindung nach Anspruch 1 oder 2, dadurch gekennzeichnet, dass sie aus einem Bis(trifluormethylacetyl)imid eines Alkalimetalles besteht.

4. Ionische Verbindung nach Anspruch 1 oder 2, dadurch gekennzeichnet, dass sie aus einem Bis(trifluormethylsulfonyl)imid eines Alkalimetalles besteht.

5. Ionische Verbindung nach einem der Ansprüche 1 bis 4, dadurch gekennzeichnet, dass M aus Lithium oder Natrium besteht.

6. Ionische Verbindung nach einem der Ansprüche 1 bis 4, dadurch gekennzeichnet, dass M aus Kalium besteht.

7. Material mit Ionenleitung, insbesondere kationenleitendes Material, dadurch gekennzeichnet, dass es wenigstens zum Teil aus einer festen Lösung einer oder mehrerer Ionenverbindungen gemäss einem der Ansprüche 1 bis 6 besteht, die vollständig in einem makromolekularen Material gelöst ist bzw. sind, das wenigstens teilweise aus einem Polymer gebildet ist, dessen Monomerbauteile wenigstens ein Heteroatom, insbesondere Sauerstoff oder Stickstoff, aufweisen, das mit dem Kation der Ionenverbindung zur Ausbildung von Bindungen vom Donator-Akzeptor-Typus befähigt ist.

8. Material nach Anspruch 7, dadurch gekennzeichnet, dass das makromolekulare Material aus Poly(ethylenoxid) oder Poly(propylenoxid) besteht.

9. Material nach Anspruch 7 oder 8, dadurch gekennzeichnet, dass das Verhältnis der Anzahl der aus den monomeren Bauteilen des obgenannten makromolekularen Materials stammenden Heteroatome zur Anzahl der Atome des Alkalimetalls der genannten ionischen Verbindung zwischen 4 und 30, insbesondere zwischen 4 und 16 beträgt.

10. Elektrochemischer Generator, dadurch gekennzeichnet, dass sein Elektrolyt aus dem Material gemäss einem der Ansprüche 7 bis 9 besteht und dass die mit ihm in Verbindung stehende negative Elektrode aus einem Material besteht, das zur Lieferung des Alkaliions befähigt ist, das dem Metall der gewählten ionischen Verbindung entspricht, und dass die positive Elektrode, die mit ihm in Verbindung steht, zur Aufnahme der Atome dieses Metalles befähigt ist.

**Patentansprüche für den Vertragsstaat**: AT

1. Verfahren zur Herstellung von ionischen Verbindungen der Formel:

$$(C_nX_{2n+1}Y)_2N^-,M^+$$

worin:
X für ein Halogen steht,
n einen Wert von 1 bis 4 aufweist,
Y eine CO- oder $SO_2$-Gruppe bedeutet, und
M ein Alkalimetall darstellt, dadurch gekennzeichnet, dass man ein Anhydrid der Formel:

$$(C_nX_{2n+1}Y)_2O$$

worin X, n und Y die vorstehend angegebenen Bedeutungen besitzen, mit einem Cyanat eines schwereren Alkalimetalles umsetzt, vorzugsweise von Kalium, wobei die Umsetzung in dem Falle, dass man ein Bis-perhalogenacylimid (oder ein Bis-halogensulfonylimid) von Lithium oder Natrium herzustellen wünscht, durch eine Ionenaustauschreaktion in Lösung mit einem Lithium- oder Natriumsalz vervollständigt wird, dessen Anion mit den Kaliumionen zur Ausbildung eines im Reaktionsmilieu unlöslichen Salzes befähigt ist, sodass die das Lithium- oder Natriumkation enthaltende ionische Verbindung aus dem Reaktionsmilieu abgetrennt werden kann.

2. Verfahren zur Herstellung von ionischen Verbindungen mit der in Anspruch 1 angegebenen Formel, dadurch gekennzeichnet, dass man ein Anhydrid der Formel:

$$(C_nX_{2n+1}SO_2)_2O$$

worin X und n die vorstehend angegebenen Bedeutungen aufweisen, mit der korrespondierenden Säure und mit Harnstoff umsetzt, vorzugsweise in Abwesenheit von Lösungsmittel, wobei das Gemisch anschliessend in einer wässerigen Lösung aufgenommen wird, welche hierauf mit einem Tetraalkylammoniumhalogenid, insbesondere Tetraalkylammoniumbromid, behandelt wird, um das entsprechende Tetraalkylammoniumbisperhalogensulfonylimid auszufällen, worauf man durch Ionenaustauschreaktion zwischen der vorstehend erhaltenen Verbindung und einer aus einem Alkalimetallderivat bestehenden Reaktionskomponente schliesslich die Verbindung gemäss Anspruch 1 erhält.

3. Verfahren nach Anspruch 1 oder 2, dadurch gekennzeichnet, dass X für Fluor steht.

4. Verfahren nach den Ansprüchen 1 bis 3, dadurch gekennzeichnet, dass man ein Bis(trifluormethylacetyl)imid eines Alkalimetalles herstellt.

5. Verfahren nach den Ansprüchen 1 bis 3, dadurch gekennzeichnet, dass man ein Bis(trifluormethylsulfonyl)imid eines Alkalimetalles herstellt.

6. Verfahren nach einem der Ansprüche 1 bis 5, dadurch gekennzeichnet, dass M aus Lithium oder Natrium besteht.

7. Verfahren nach einem der Ansprüche 1 bis 5, dadurch gekennzeichnet, dass M aus Kalium besteht.

8. Verfahren zur Herstellung eines Materials mit Ionenleitung, insbesondere eines kationenleitenden Materials, dadurch gekennzeichnet, dass man eine oder mehrere, nach dem Verfahren gemäss einem der Ansprüche 1 bis 7 erhaltene ionische Verbindungen vollständig in einem makromolekularen Material löst, das wenigstens teilweise aus einem Polymer gebildet ist, dessen monomere Bauteile wenigstens ein Heteroatom, insbesondere Sauerstoff oder Stickstoff aufweisen, das zur Ausbildung von Bindungen mit dem Kation der ionischen Verbindung vom Donator-Akzeptor-Typus befähigt ist.

9. Verfahren zur Herstellung eines Materials mit Ionenleitung nach Anspruch 8, dadurch gekennzeichnet, dass das makromolekulare Material aus Poly(ethylenoxid) oder Poly(propylenoxid) besteht.

10. Verfahren zur Herstellung eines Materials mit Ionenleitung nach Anspruch 8 oder 9, dadurch gekennzeichnet, dass die Anzahl der aus den monomeren Bauteilen des obgenannten makromolekularen Materials stammenden Heteroatome zur Anzahl der Atome der genannten ionischen Verbindung zwischen 4 und 30, insbesondere zwischen 4 und 16 beträgt.

**Claims for the Contracting States** BE, CH, DE, GB, IT, LI, LU, NL, SE

1. Ionic compound, characterized by the formula:

$$(C_nX_{2n+1}Y)_2N^-,M^+$$

in which:
- X is a halogen,
- n varies from 1 to 4,
- Y is a CO or $SO_2$ group and
- M is an alkali metal.

2. Ionic compound according to claim 1, characterized by the fact that X is fluorine.

3. Ionic compound according to claim 1 or 2, characterized by the fact that it consists of a bis-(trifluoromethyl-acetyl) imide of an alkali metal.

4. Ionic compound according to claim 1 or 2, characterized by the fact that it consists of a bis-(trifluoromethyl-sulfonyl) imide of an alkali metal.

5. Ionic compound according to anyone of claims 1 to 4, characterized by the fact that M is constituted by lithium or sodium.

6. Ionic compound according to anyone of claims 1 to 4, characterized by the fact that M is constituted by potassium.

7. Material with ionic conduction, particularly cationic, characterized by the fact that it is constituted at least in part by a solid solution of one or several ionic compounds according to anyone of claims 1 to 6, entirely dissolved within a macromolecular material formed at least in part by a polymer whose monomer units include at least a heteroatom, particularly oxygen or nitrogen, adapted to form bonds of the donor-acceptor type with a cation of the ionic compound.

8. Material according to claim 7, characterized by the fact that the macromolecular material is constituted by a poly(ethylene oxide) or a poly(propylene oxide).

9. Material according to claim 7 or 8, characterized by the fact that the ratio of the number of heteroatoms derived from monomer units of said macromolecular material to the number of atoms of alkali metal of said ionic compound is comprised between 4 and 30, particularly between 4 and 16.

10. Electrochemical generator, characterized by the fact that its electrolyte is constituted by the material according to anyone of claims 7 to 9 and by the fact that the negative electrode associated with it is constituted by a material adapted to supply the alkali ion corresponding to the metal of the selected ionic compound, and that the positive electrode associated with it is adapted to incorporate the atoms of this metal.

**Claims for the Contracting State**: AT

1. Process for preparing ionic compounds of formula:

$$(C_nX_{2n+1}Y)_2N^-,M^+$$

in which:
- X is a halogen,
- n varies from 1 to 4,
- Y is a CO or $SO_2$ group and
- M is an alkali metal, characterized by the fact that the anhydride of formula:

$$(C_nX_{2n+1}Y)_2O$$

in which X, n and Y have the above indicated meanings, is reacted with a cyanate of a heavier alkali metal, preferably potassium, the reaction being completed, in the case where it is desired to obtain a bis-perhalogenoacyl imide (or a bis-perhalogenosulfonyl imide) of lithium or of sodium, by an ionic exchange reaction in solution with a salt of lithium or of sodium whose anion is adapted to form, with potassium ions, an insoluble salt in the reaction medium, the ionic compound containing the lithium or sodium cation being then liable to be separated from the reaction medium.

2. Process for preparing ionic compounds of formula indicated in claim 1, characterized by the fact that the anhydride of formula:

$$(C_nX_{2n+1}SO_2)_2O$$

in which X and n have the above indicated meanings, is reacted with the corresponding acid and urea, preferably in the absence of solvent, the mixture being then collected in an aqueous solution, which is then treated with a tetra-alkyl-ammonium halide, particularly the tetra-butyl-ammonium

bromide, to precipitate the corresponding tetra-alkyl-ammonium bis-perhalogenosulfonyl imide and by an ionic exchange reaction between the previously obtained compound and the reagent constituted by an alkali metal derivative, the compound according to claim 1 is finally obtained.

3. Process according to claim 1 or 2, characterized by the fact that X is fluorine.

4. Process according to claims 1 to 3, characterized by the fact that a bis(trifluoromethyl-acetyl) imide of an alkali metal is obtained.

5. Process according to claims 1 to 3, characterized by the fact that a bis(trifluoro-methylsulfonyl) imide of an alkali metal is obtained.

6. Process according to anyone of claims 1 to 5, characterized by the fact that M is constituted by lithium or sodium.

7. Process according to anyone of claims 1 to 5, characterized by the fact that M is constituted by potassium.

8. Process for preparing a material with ionic conduction, particularly cationic, characterized by the fact that one or several ionic compounds obtained by the process according to anyone of claims 1 to 7 are placed in a solution, entirely dissolved within a macromolecular material formed at least in part by a polymer whose monomer units comprise at least one heteroatom, particularly oxygen or nitrogen, adapted to form donor-acceptor type bonds with the cation of the ionic compound.

9. Process for preparing a material with ionic conduction, according to claim 8, characterized by the fact that the macromolecular material is constituted by a poly(ethylene oxide) or a poly(propylene oxide).

10. Process for preparing a material with ionic conduction according to claim 8 or 9, characterized by the fact that the ratio of the number of heteroatoms derived from monomer units of the above mentioned macromolecular material to the number of atoms of the alkali metal of said ionic compound is comprised between 4 and 30, particularly between 4 and 16.

Fig.1.

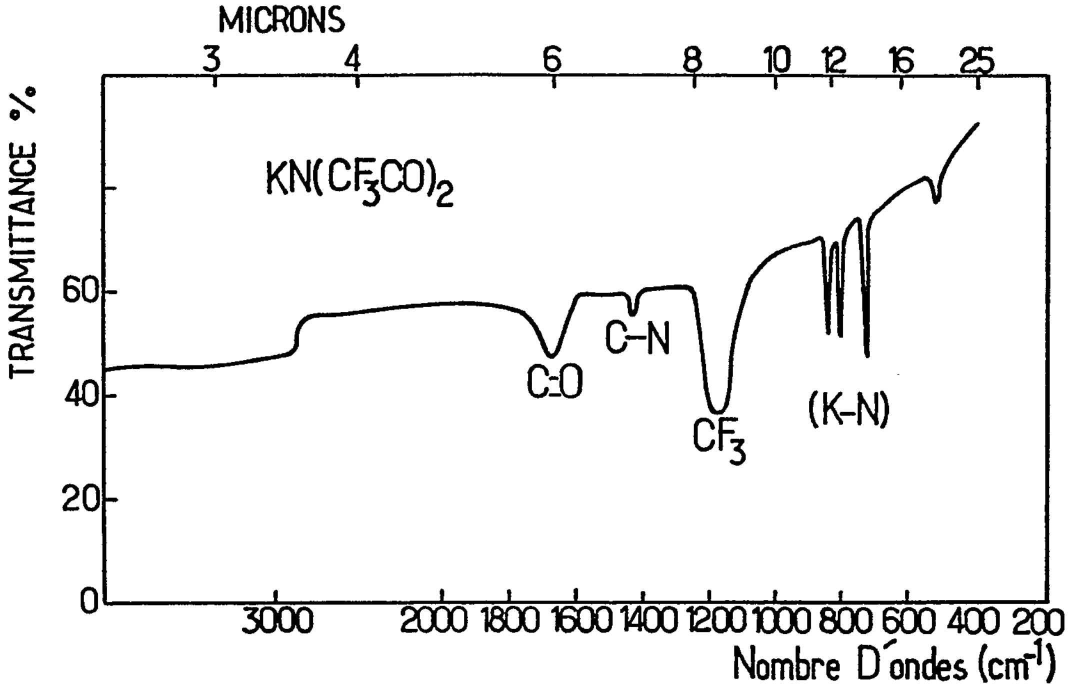
MICRONS
3
4
6
8
10
12
16
25
TRANSMITTANCE %
KN(CF3CO)2
60
40
20
0
C=O
C-N
CF3
(K-N)
3000
2000 1800 1600 1400 1200 1000 800 600 400 200
Nombre D'ondes (cm-1)

Fig.2.

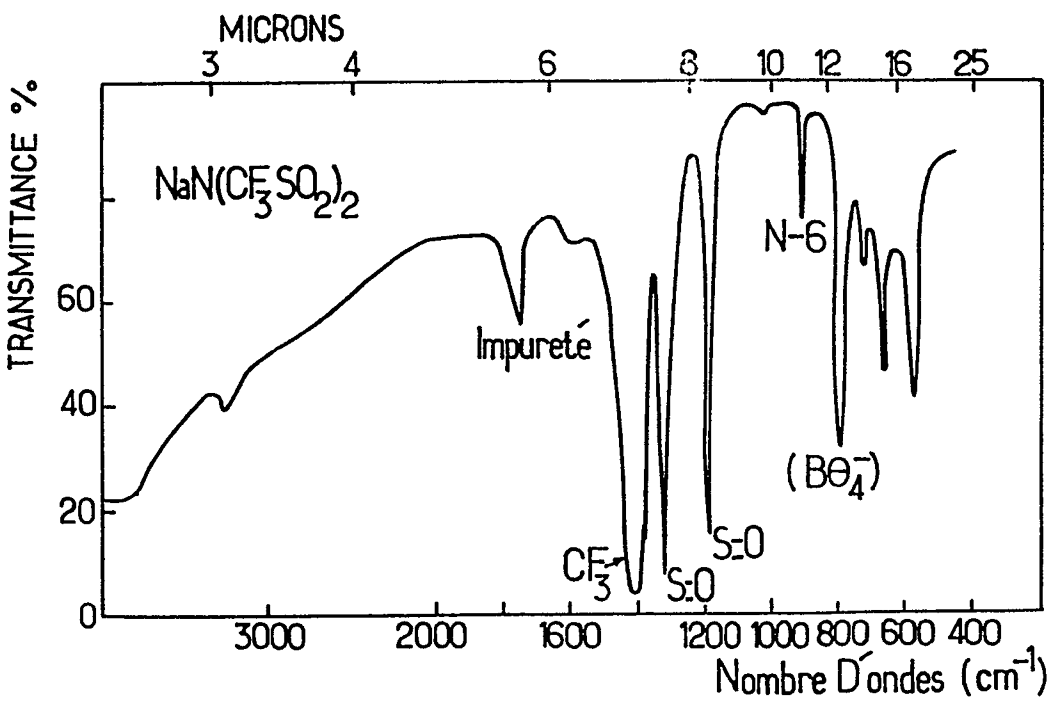
MICRONS
3
4
6
8
10
12
16
25
TRANSMITTANCE %
NaN(CF3SO2)2
60
40
20
0
Impureté
CF3
S=O
S=O
N-6
(BΘ4-)
3000
2000
1600
1200 1000 800 600 400
Nombre D'ondes (cm-1)